# EUROPEAN PATENT SPECIFICATION

(11) **EP 0 287 631 B1**
(45) Date of publication and mention of the grant of the patent: **23.06.1993**
(21) Application number: 87907060.5
(22) Date of filing: 02.10.1987
(51) Int. Cl.: B41L 45/00, B65H 3/06, B65H 3/46, B65H 5/06, B41J 3/54, B41J 13/12

(54) **ENVELOPE PRINTING SYSTEM FOR ADDRESSES AND BAR CODES**
DRUCKSYSTEM FÜR ADRESSEN UND STRICHKODES AUF BRIEFUMSCHLÄGEN
SYSTEME D'IMPRESSION D'ADRESSES ET DE CODES A BARRES SUR DES ENVELOPPES

(30) Priority: 14.10.1986 US 918122
(43) Date of publication of application: 26.10.1988
(73) Proprietor: BRYCE OFFICE SYSTEMS, INC., Oxford, Connecticut 06483 (US)
(72) Inventor: EISNER, Lawrence, F., Cheshire, CT 06410 (US); HURD, Bruce, E., Monroe, CT 06468 (US)
(74) Representative: Warren, Anthony Robert
(86) International application number: US8702518
(87) International publication number: WO8802734

(56) References cited:
- DE-A- 3 104 351
- JP-A-60 102 344
- US-A- 1 003 087
- US-A- 2 639 916
- US-A- 2 764 409
- US-A- 3 855 457
- US-A- 3 896 719
- US-A- 3 902 411
- US-A- 3 933 350
- US-A- 3 966 190
- US-A- 4 163 550
- US-A- 4 232 860
- US-A- 4 277 190
- US-A- 4 437 658
- US-A- 4 483 633
- US-A- 4 526 358
- US-A- 4 529 187
- US-A- 4 552 065
- US-A- 4 561 352
- US-A- 4 653 742

## Description

This invention relates to the field of envelope addressing systems. In particular, it relates to systems that imprint a bar code address at the same time as imprinting the normal, legible address.

The United States Post Office is beginning to utilize automated mail sorters which sort envelopes on the basis of a zip code encoded as a machine-readable bar code. Such encoded bar code, to be acceptable, must meet strict specifications as to size, spacing of bars, and placement upon the envelope. Accordingly, there is a need for an accurate, but relatively inexpensive office machine that will print such bar codes at the same time as it imprints the legible address.

The invention relates to addressing or printing systems generally as disclosed in US-A-3,933,350, 3,902,411 and 4,483,633, and DE-A-3,104,351 and 2,823,724.

More particularly, the invention is directed to a printing system, of the general type disclosed in DE-A-2,823,724, for simultaneously printing lines containing information upon a moving substrate, each line being elongated in a first direction corresponding to the direction of movement of the substrate, some of the lines being address lines, the lines, from top to bottom of the substrate, comprising, consecutively, at least first, second, third, and fourth lines spaced from each other in a second direction perpendicular to the first direction, said lines being printed in parallel, and longitudinally along said lines, while the substrate is in continuous motion, said printing system including:
a print head array including a plurality of print heads, one for printing each line, comprising at least first, second, third and fourth print heads associated with the first, second, third and fourth consecutive lines, respectively, at least some of the print heads being longitudinally offset relative to one another;
a stationary flat platen positioned in operative relationship with the print heads;
a plurality of pairs of driven transport rollers associated with said array and said platen, to draw printable substrates longitudinally between the print head array and platen; and
an electronic controller to vary the time each print head starts to print to correspond with the extent to which that print head is offset, so that lines may be more closely spaced than permitted by the size of said print heads and said lines may be printed with predetermined starting positions.

In the apparatus disclosed in DE-A-2,823,724, all the print heads are offset from each other in the direction of travel of the substrate through the rollers, i.e. in the longitudinal, first direction. Each print head is also offset in a direction perpendicular to the direction of travel by a predetermined distance from the next, consecutive, print head for printing consecutive lines of print. This possesses the disadvantage that it requires a device which is very long, and has a number of intermediate rollers which are necessary in order to transport the substrate being printed without distortion.

It is an object of the present invention to provide an improved printing system.

The present invention is characterised by:
said substrates comprising envelopes;
said lines also including a bar code line; and
means mounting said print head array so that at least two of said print heads overlap each other in said first, longitudinal direction, the print heads which overlap not being consecutive line printing print heads in said second direction, so that the positioning of the print heads in said first direction is not in sequence with the numbers of the lines printed thereby, and so that the print heads are grouped together in association with said stationary platen.

In one embodiment of the invention, a computer-controlled addressing system is provided that is capable of rapidly addressing envelopes in legible print and at the same time imprinting the zip code in a predetermined bar code format at a specified location on the envelope. This is done by printing the three to five lines of legible address and the line of bar code in parallel.

The envelopes are fed one at a time lengthwise from one end to an array of dot matrix printer heads, one for each line. There is one printer head for each line, and the heads are offset to permit concurrent, serial printing of all the lines at once. The spacing of the text along the lines is controlled by software associated with an internal system controller. The envelope moves longitudinally, at a constant speed, during printing.

Envelopes are fed from a stack placed in a sloping bin adjacent to the print heads. A lobed feed roller serves to vibrate the stack while a driven feed roller at the lower end serves to draw envelopes in through a gate one at a time.

Transport rollers, together with envelope-detecting sensors, synchronize flow of individual envelopes under the print heads. These rollers are biased to press the lower longitudinal edge of each envelope against a back fence during printing so that accurate alignment is achieved for the bar code.

Reference will now be made to the accompanying drawings, in which:-
Fig.1 is a perspective view of an addresser unit incorporating bar code addressing system embodying the invention. The envelope feeding bin is seen to the right. Envelopes are fed from the bottom of the stack and move towards the left through the unit.
Fig. 2 is a portion of the face of an envelope showing the legibly-printed address and the line of bar code towards the bottom edge.
Fig. 3 is an enlarged portion of the bar code, showing how it is made up of dots printed by a dot matrix printer.
Fig. 4 is a top plan view of our addresser. The cover has been removed to show some of the inner structure.
Fig. 5 is a left elevation, with the cover removed and partially broken away to show the print head array.
Fig. 6 is a vertical section from the front, taken on line 6-6 of Fig. 5. It shows the envelope feed mechanism and flow, the feed control sensors, and the printing heads.
Fig. 7 is a vertical section, taken on line 7-7 of Fig. 4, showing details of the print heads.
Fig. 8 is a vertical section, taken on line 8-8 of Fig. 4, showing one pair of drive rollers.
Fig. 9 is a vertical section from the front, taken on line 9-9 of Fig. 4, showing details of the envelope feed.
Fig. 10 is a generalized flow chart showing its interrelationship with the timing control wheel.
Figs. 11, 12, and 13 are flow charts describing the control software.

### Background

The addition of machine-readable bar code on the face of envelopes to encode delivery zip codes allows mail to be sorted at a much faster pace than would otherwise be, thus allowing mail to be delivered more quickly and more economically. Such efficiency is enhanced if the human-readable address can be imprinted at the same time.

Achievement of this efficiency is made possible by precise placement of the address, and particularly the bar code, on the envelope in accordance to rigid specifications.

To satisfy the United States Postal regulations, the bar code must start 10.16 cm (4 inches) from the right-hand edge of the envelope (with a maximum error of +0 and - 3.2 mm (+ 0 and -1/8")). It must be 6.4 mm ± 1.6 mm (1/4" ± 1/16") from the bottom edge, have bars of 1.3 mm ± .25 mm (.050" ± .010") and 3.2 mm ± .25 mm (.125" ± .010") in height, .5 mm ± .13 mm (.020" ± .005") in width and horizontal spacing of bars of 21 ± 1 bars per 2.54 cm (per inch). The bar code addressing system embodying the invention meets these requirements.

Until now, one wishing to produce a mass mailing first had to print labels on a conventional printer and then affix the labels to envelopes, all at a substantial cost. The present system, by contrast, will receive these addresses directly from the user's computer data base and will print five-line addresses, together with a proper bar code, directly upon the envelopes, all in a single pass while the envelope is continually moving at a constant speed. The five address lines and the bar code line will be printed simultaneously, in parallel, with the printing being done lengthwise of each line.

An effort has been made in the past to print lines in parallel. The system required specially designed, thin dot printer heads, so the heads could be positioned one next to the other. An example of this will be found in Matschke United States patent 4,462,706 and in his related United States patents 4,134,691 and 4,218,148.

Another prior envelope printer utilized a single 64-wire print head for printing multiple lines on envelopes longitudinally. However, it included no means for tracking envelope position to assure precisely positioned printing, and used changing speeds of movement of the envelope during the printing cycle.

### Broad Description Of The System

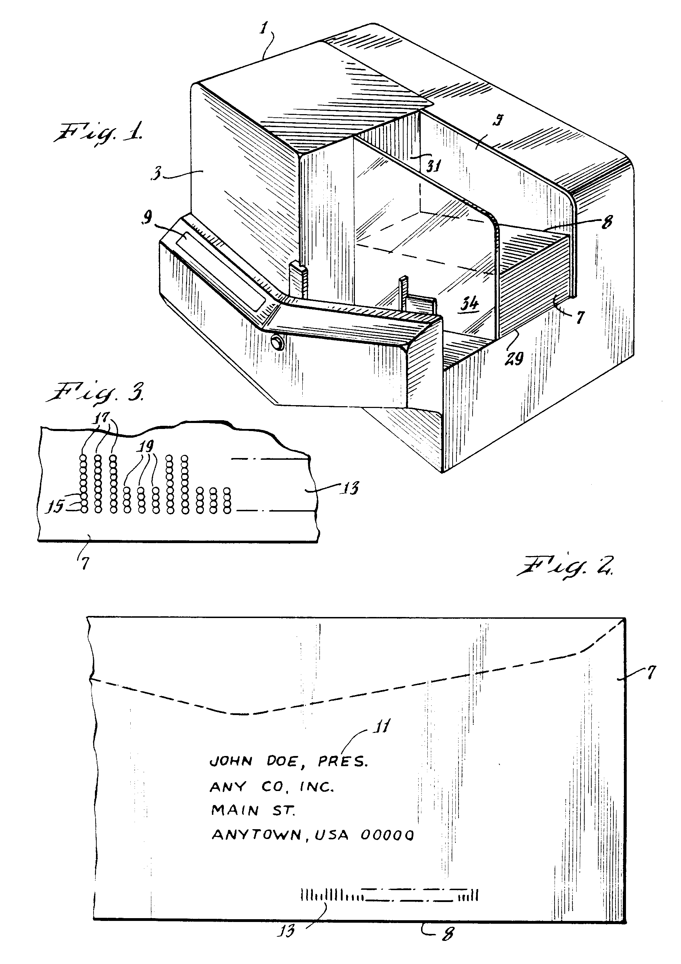

The addresser, i.e., the assembled unit for our bar code addressing system, is generally shown in the perspective view of Fig.1; a sample addressed envelope, in Fig. 2; and an enlarged section of bar code, in Fig. 3.

Addresser 1 includes housing 3 and envelope bin 5 (containing envelopes 7). There is a control panel 9. The housing contains feed rollers, transport rollers, print heads and related gear, envelope position sensors, timing mechanisms and an internal system controller, all of which are described in more detail below.

The envelopes 7 to be addressed are placed in bin 5, and the addresser operated through control panel 9. The envelopes 7 will have imprinted on them a human-readable address 11 of up to five lines and a machine-readable bar code 13. The bar code is a series of long vertical lines 17 and short vertical lines 19. Each of the lines is formed of a series of dots 15 produced by a dot matrix print head. The bar code will be positioned parallel to, and proximate to, the lower edge 8 of envelope 7. The position of bar code 13 and the length and spacing of bars 17 and 19 will conform to the Postal regulations.

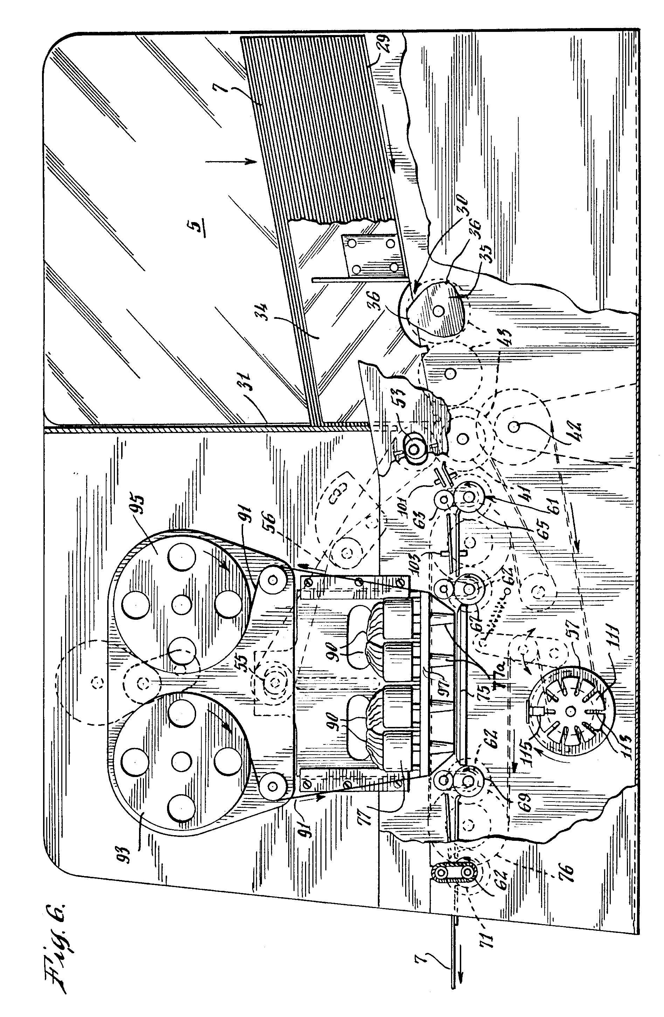

The printing itself occurs within the housing 3. Envelopes 7, with their lower edges 8 (as viewed in Fig. 2) against the back wall of bin 5, are drawn into the housing through nip 51 (Fig. 9) by feed roller 41, which is adapted to draw one envelope at a time from envelope bin 5. Thereafter, the envelopes are drawn through addresser 1 by a series of transport rollers 61, 67, 69, and 71 (Fig. 6).

Once inside the housing 3, the envelopes actuate position sensors 101 and 103 which cause an array 77 of print heads to print the address 11 and bar code 13 in the proper position, the last letters and bars of each line being printed first. There is a print head for each line, and the print heads are longitudinally offset relative to one another to permit close spacing. "Start" times for the individual print heads are adjusted to correlate with the extent of offset.

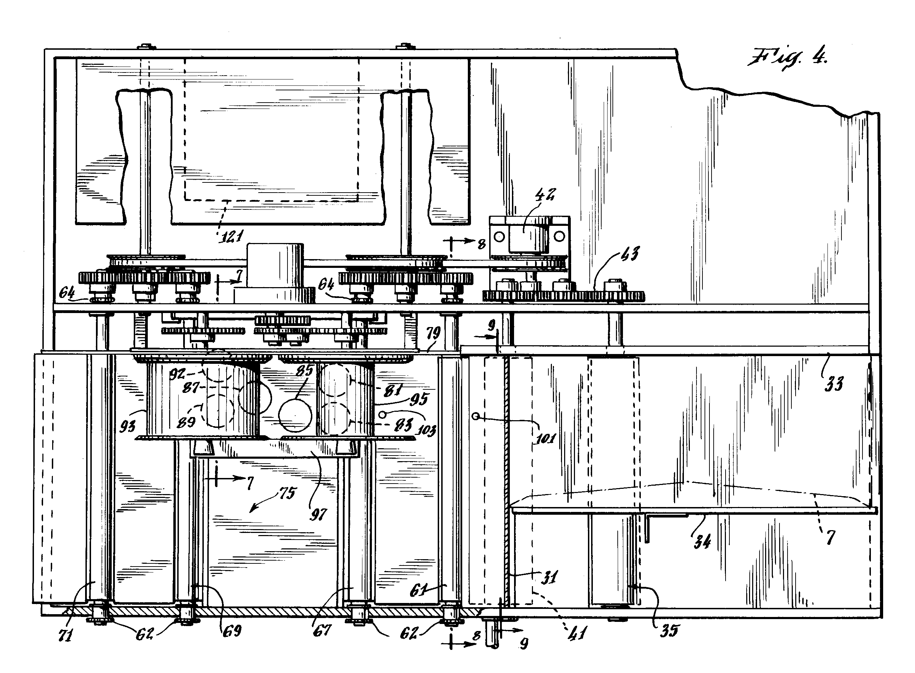

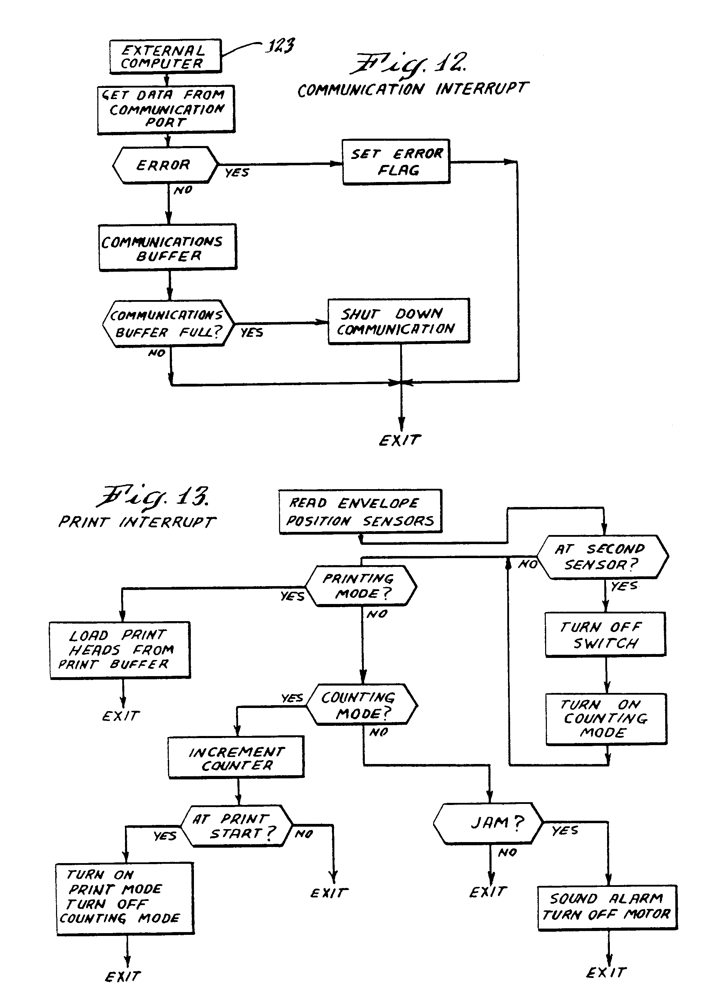

The addresses printed initially come from a data bank within an external computer 123 (Fig. 12). They have been transferred to the internal system controller 121 (Figs. 4, 5 and 10). The controller has been programmed to print the addresses 11 in reverse sequence and to determine, and to control printing of, the proper bar codes 13 for the particular address. Reverse sequence is used because the envelopes are fed with the right-hand edge (as viewed in Fig. 2) as the leading edge.

The bar code used is the one specified by the Postal service.

### The Envelope Feed

In printing envelopes, it is important that the envelopes be fed to the printer exactly one at a time, and that one be fed every time.

The envelope feed structure is shown in Figs. 1, 4, 6, and 9. This includes envelope feed bin 5, having a bottom surface 29, sloping downwardly in the direction of desired feed, a feed wall 31, against which the envelopes 7 press as a result of the slope of bottom surface 29, a back wall 33, and a slidable fence 34. After adjusting the slidable fence 34 so that the stack of envelopes will fit loosely, but in position within the bin, the envelopes 7 are placed in the bin 5 face up, with their lower edges 8 against back wall 33.

The bottom surface 29 includes a transverse opening or slot 30, centrally of the stack of envelopes, through which projects the upper portion of first feed roller 35. This roller has a frictional surface with lobes 36 (Fig. 6). In our preferred form, the lobes on feed roller 35 provide an inner diameter of 2.8 cm (1 1/8 inch) and an outer diameter of 3.3 cm (1 3/8 inch).

Feed roller 35 is driven through clutch 42 (Fig. 4) and is mounted on one-way roller bearings, so as to rotate freely (when clutch 42 is disengaged) only in the direction of desired motion of the envelopes (towards the feed wall 31). Upon rotation, roller 35, due to its lobed, high frictional, irregular shape, serves to jiggle or vibrate the stack of envelopes 7, so as to be certain that the stack of envelopes moves downwardly (that none get "hung up"), and also to push the lowermost envelope towards feed wall 31.

Below feed wall 31 is a gate 32 (Fig. 9) having a rounded or cylindrical control surface 45. A transverse opening or nip 51 is formed between the lower portion of surface 45 and second feed roller 41. The upper surface of second feed roller 41 is approximately in the plane of the bottom surface 29 of the bin and, in effect, forms an extension of that surface. Like feed roller 35, roller 41 has an envelope-engaging frictional surface, and is mounted and driven through one-way bearings, so as to rotate freely in the direction of the desired motion of the envelopes when clutch 42 is disengaged. Rollers 35 and 41 are coupled through coupling gears 43, and so are driven and act as one.

The cylindrical control surface 45, shaped like a roller, is positioned above second feed roller 41. Surface 45 and roller 41 are spaced apart by a distance that is adjustable and just sufficient to permit the passage of a single envelope through the nip 51 formed by the two. Surface 45, in the nip area at 47, is relatively frictionless, being made of a smooth material such as Lexan (a polycarbonate plastic). Above the frictionless area 47, is a highly frictional area 49, measuring about 15° of arc, which, we have found, can be made, for example, of fine sandpaper (grade 220 works successfully).

The control surface 45 in conjunction with feed roller 41 provides for a positive feed of only single envelopes in seriatim, since a second envelope above the first would be prevented from moving by the frictional engagement of its leading edge with the high frictional surface 49.

The spacing or height of the nip 51, as well as the space between the lower extremities of the print generating portions 77a of the print heads of the array 77 (Fig. 6) and platen 75, can be varied by means of eccentrics 53 and 55 which turn simultaneously via anti-backlash chain 56. Eccentric 53 is positioned in a slot 54 in the cylinder forming the control surface 45 which is slidably mounted at opposite ends and guided by pins 37 (Fig. 9). Rotation of the eccentric 53 serves to lift the control surface 45, thus varying the size of the nip 51. The eccentric is made of metal and fits snugly within the slot 54 to prevent backlash movement of the control surface 45.

The envelope feed mechanism operates on a signal from the internal system controller 121. This causes both feed rollers 35 and 41 to rotate in a direction such that their upper surfaces move the lowermost envelope 7 in the direction of the printing heads (described below). Because of its irregular shape, roller 35 serves to vibrate the stack of envelopes and to cause the lowermost envelope, which may have been held by friction surface 49, to drop down to the nip 51 between feed roller 41 and control surface 45. Roller 41 then drives this lowermost envelope longitudinally to the first set of transport rollers 61 leading to the print heads.

Once the transport rollers 61 have received the envelope from the nip 51, they draw it forward. When the leading edge of the envelope actuates position sensor 103, described below, clutch 42, controlling the drive for rollers 35 and 41, is disengaged, and the feed rollers 35 and 41 are no longer driven. The envelope can continue to move on the feed rollers 35 and 41, however, since these rollers are free to rotate on their one-way roller bearings.

### The Transport Rollers

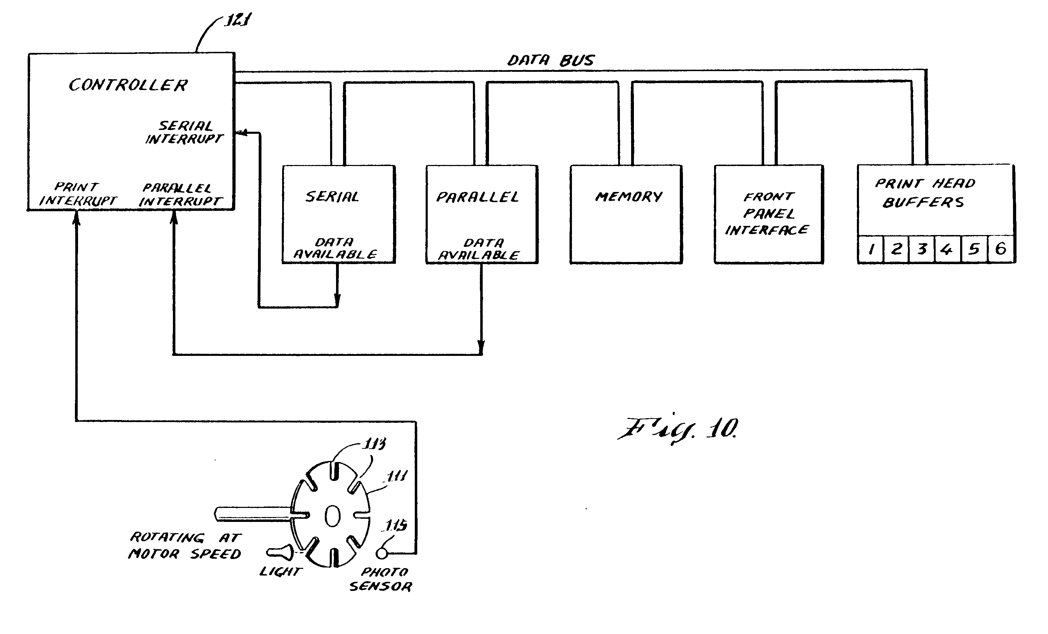

The transport rollers are shown in Figs. 4, 5, 6, 7, and 8. They serve to draw the envelopes 7 over the printing platen 75 and beneath the print head array 77 for printing, to control the speed of movement of the envelopes beneath the print head array 77 so as to enable synchronization of the envelope motion with the rate of printing, and to eject the envelopes 7 after printing.

There are two sets or pairs 61 and 67 of transport rollers to carry the envelopes 7 to the printing platen 75, and two sets or pairs 69 and 71 to carry the envelopes away from platen 75. Set 61 is exemplary. It contains an upper roller 63 and a lower driven roller 65, both having elastomeric, frictional surfaces, such as rubber.

The two rollers 63 and 65 are interconnected by loop springs 62 and 64, one at each end of the rollers, spring-pressing the rollers together. The spring tension is greater on the back (inner) ends of the rollers. This differential tension gives the back end of the roller a smaller effective diameter than the front end, and so serves to press the envelope 7 rearwardly against vertical fence 79 as the envelope passes through the rollers 63 and 65. The same also applies to roller sets 67, 69, and 71. The pressure towards fence 79 presses envelope edge 8 tightly against fence 79 and so provides proper alignment and spacing while the bar code 13 is being printed. This is important due to the fact that the address and bar code must be precisely positioned on the envelope to meet the United States Postal Service specifications. Preferably, fence 79 is in the same plane as back wall 33.

All four sets of transport rollers 61, 67, 69, and 71 are designed so that the bottom rollers are gear driven. Their drives are interconnected with motor 57 and operate at the same speed. They also operate at the same surface speed as the feed rollers 35 and 41. The top rollers are free to float in the vertical direction (subject to the pressures of the loop springs). This is necessary to accommodate envelopes of various thicknesses and is done by mounting the ends of the top rollers in bushings which are free to slide in slots and which are held to the lower rollers with springs. The envelope passes through the sets of transport rollers in the sequence 61, 67, 69, 71.

### The Print Head Array

The print head array 77 is located just inside housing 3 and is shown in Figs. 4, 5, 6, and 7. It consists of six dot matrix heads, five for the address lines and a sixth for the bar code. Due to the difficulty of spacing the heads side by side (due to space limitations), the print heads are arranged in an array, that is, they are staggered (offset) longitudinally along the lines. This means that printing control software must adjust the timing of printing along each line to compensate for the offset positions of the heads, i.e. the algorithm adjusts the printing timing so the lines are properly positioned in the finished address.

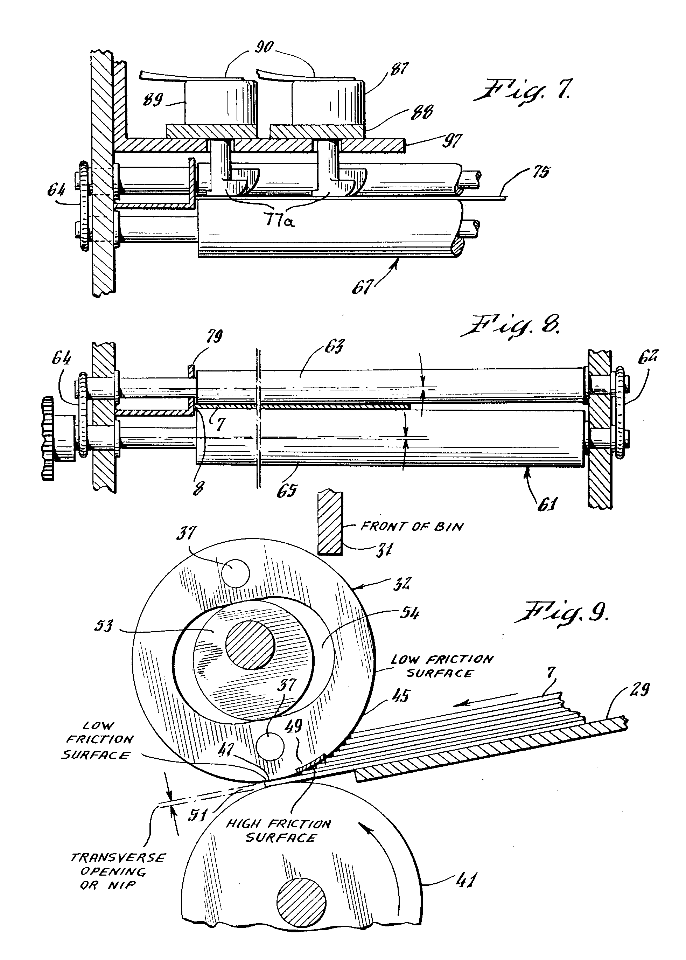

The printing platen 75 is positioned between transport rollers 67 and 69 so that the envelope 7 passes over it. The print head array 77 is mounted above the platen. It consists of six print heads 81, 83, 85, 87, 89, and 92 having print-generating portions 77a which are located in operative relationship with the platen so as to print the address lines and bar code line on an envelope passing over the platen. It will be apparent from Fig. 6 that the print-generating portions 77a, and the platen 75, are disposed entirely between the two sets or pairs 67, 69 of transport rollers, and that there are no other transport rollers or other transporting means between the print heads. The print heads are supported by support arm 97 (Fig. 7); and each print head has a mounting flange (such as flange 88 for head 87) mounted on arm 97. Electrical leads 90 connect the print heads to the internal system controller 121. Controller 121 is connected also to the external computer 123.

Print heads 83 and 81 are the leading heads (printing first); as shown, they print the first and fifth lines of the address; 85 is next, printing the second line; 87 is next, printing the fourth line; and 89 and 92 are next, and are in parallel, printing the third line and the bar code line, respectively. Thus, the computer algorithm should be designed so printing of the individual lines starts with head 81 and 83 first, followed in sequence starting printing by 85, then 87, and then 89 and 92 together.

This does not mean that the printing of one line must be completed before the next one is started, but, rather, that the printing of the individual lines takes place simultaneously with printing starting at different times for each line. That is, the time of commencement of printing of the individual lines varies, depending upon the extent to which the print head for the particular line is offset, but all six lines are being printed together in parallel.

A printing ribbon 91 passes between the print head array 77 and printing platen 75. It comes from feed reel 93 and is wound up on take-up reel 95.

### The Position Sensors

In order to control envelope feed and to properly position the address and bar code on the envelopes, it is necessary to know the position of the envelopes as they pass through the feed rollers and the transport rollers. This is accomplished by use of position sensors coupled to the internal system controller 121.

The sensors are each made up of a reflective object transducer positioned in the envelope path to detect the presence or absence of an envelope in a specific position. The first sensor 101 is in the path between the second feed roller 41 and the first set of transport rollers 61. The second sensor 103 is between the first and second sets of transport rollers 61 and 67.

Position tracking is accomplished with the circuit of the internal system controller 121. It is an electronic control system which responds to signals picked up by a sensor 115 from a timing control wheel 111, described below, and to signals from sensors 101 and 103. The signals are directly related to the distance which each envelope travels and are used to control when each print head starts to print and at what speed it should print.

If we assume that an envelope has started to move through gate 32 in the feed wall 31, driven by feed rollers 35 and 41, then it will intercept sensor 101 shortly after its leading edge passes through nip 51. No controlling action is taken at this time. When the envelope's leading edge passes through the set of transport rollers 61 and intercepts sensor 103, circuitry is thereby activated to disengage clutch 42 controlling the feed rollers and causes them to stop being driven. Removal of power from the feed rollers will have no effect upon envelope motion, since the feed rollers are on one-way bearings and, by that time, the first set of transport rollers 61 will be drawing the envelope along. This removal of power, however, prevents the feed rollers from starting to feed a second envelope. Additionally, the printing sequence will be activated at this time to synchronize the operation of print head array 77 with the position of the envelope.

When the trailing edge of the envelope reaches the first sensor 101, the feed rollers are again actuated, starting the next envelope through the printing cycle.

This control could be accomplished through use of sensor 103 only for both purposes. This, however, results in more gap between envelopes.

### The Timing Mechanism

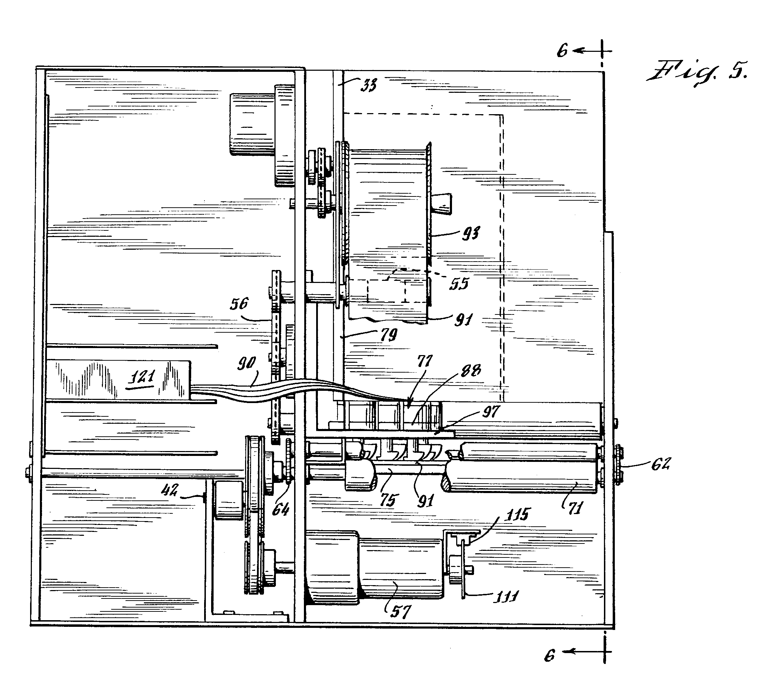

The drive motor 57 (Fig.5) is coupled to and drives all of the feed and transport rollers. It is also directly coupled to timing control wheel 111 which has equally spaced timing slots 113 about its periphery.

The rate of printing is controlled by the speed of drive motor 57. Because the drives are coupled to the motor, the motor speed is directly related to the rate of motion of the envelopes. Thus, the envelope speed is directly related to the speed of rotation of timing control wheel 111. Wheel 111 normally rotates at about 5,500 RPM.

Wheel 111 has slots 113 so spaced that the distance between them is equivalent to .00793" of linear movement of the envelopes; and the sensor 115 is mounted about the wheel 111 so as to detect the gaps or slots 113. This sensor 115 is connected to the internal system controller 121 and so serves to synchronize the printing with the envelope's linear motion, i.e., this electronic control system tells each print head when to commence to print and the rate at which it should print.

We have found that we can print at a linear speed of about 40.6 cm (16 inches) per second. This equates to about 7,600 small (#6) envelopes per hour, or about 5,400 large (#10) envelopes per hour.

### Computer Control

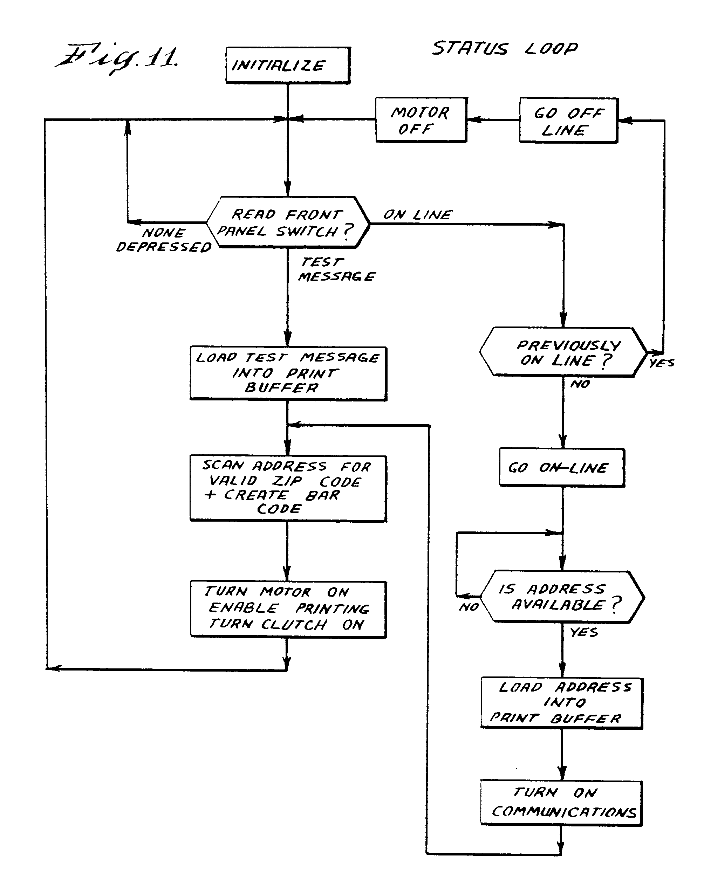

Electronic control of the system is through internal system controller 121 which is connected to, and, with appropriate software, controls, the feed and transport rollers and the print heads. Flow charts for a typical program are shown in Figs. 10, 11, 12, and 13.

The software flowcharts show status loop (Fig. 11), communications interrupt (Fig. 12), and print interrupt (Fig. 13).

An interrupt is an event triggered by the hardware in the system; and it causes a certain section of the software in the internal system controller 121 to be implemented. It may occur asynchronously with respect to other sections of the software. In our envelope addressing system there are two types of interrupt: the communications interrupt (Fig. 12) which accepts address data from the external computer 123, and the print interrupt (Fig. 13) which occurs each time a gap 113 in timing control wheel 111 is sensed (Figs. 5 and 10). The print interrupt is used to synchronize the firing of the print heads of array 77 (i.e., printing dots on paper) with the motion of the envelopes 7 past the print heads.

The status loop is considered the "foreground task" because it is always running and controlling operation of our envelope addressing system. The two interrupt routines are considered "background tasks" because they are only run when their corresponding hardware event occurs. When an interrupt is through, control passes back to the status loop at the same position in its cycle as before the interrupt.

The status loop (Fig. 11) works upon initialization to clear RAM memory. It then checks the front panel switches 9 until it finds either the "test message" or "on-line" switch actuated.

If "test message", a previously stored address is loaded into the print buffer and is scanned for a valid zip code. The zip code is converted to a bar code having specifications conforming to Postal regulations, and the entire address (legible and bar) is converted to a graphics image and placed in the print buffer. Motor 57 is turned on to enable printing, and clutch 42, controlling feed rollers 35 and 41, is actuated to start envelope feeding. The motor and clutch have been controlled by internal system controller 121.

If the "on-line" switch has been actuated while the unit is off, the controller 121 is enabled to accept address data from external computer 123 and to print it. (If actuated while the unit is on, the switch turns it off). When address data is received, a bar code is produced, the address is converted to graphic image, and printing is enabled as in the test message processing routine. It should be noted that, since the communications interrupt has been previously enabled, there must be data in the communications buffer to print.

The communications interrupt routine (Fig. 12) is called whenever a new byte of data is transmitted to the internal system controller 121 from the external computer 123. There are two such routines, serial interrupt and parallel interrupt (Fig. 10). The difference between them is that the serial interrupt is called when information is received through the serial port, and the parallel interrupt is called when information is received through the parallel port (Normally only one of these will be used for a particular installation). Both routines work in the same fashion except for the source of data.

When data is received from the communications port, it is checked for format error. If error has occurred, the data is discarded, and an error flag is set for the status loop, to shut down operation until it has been corrected. If the data is valid, it is stored in the communications buffer for later use. When this buffer is full, communications are temporarily stopped.

The communications buffer is the region in the RAM memory of the internal system controller 121 set aside for storing incoming addresses. In the present configuration of the machine, there is room for up to nine addresses. Thus, the external computer 123 may transmit data at a faster rate than the print heads are capable of printing, and up to nine addresses may be sent. When nine addresses are stored in the communications buffer, the program shuts off communications. This prevents the external computer 123 from sending address information to the printer. After a communications interrupt is through, the status loop routine will be put back in control at the same point in execution as it was before the interrupt. As an address is printed, the address information in the pertaining section of communications buffer is erased, and that section of the buffer is then free to receive another address. Communications is then restarted, enabling the external computer 123 to again send address data to the internal controller 121.

The print buffer is a region in RAM memory of the internal system controller 121 in which the "graphics representation" of data to be printed is stored. What we call "graphics representation" is a mapping of the individual dots which must be printed in order to produce readable characters, and also includes the bar code,obtained by conversion of the zip code in the address. This contrasts with the data in the communications buffer, which is in the form of ASCII data (a machine format of the data). This print buffer is filled with data prior to printing, and, as printing progresses, is cleared to make way for the next address to be printed.

Printing is controlled by the position sensors 101 and 103 and the print interrupt. The sensors are read, and if the second sensor 103 detects the presence of an envelope, clutch 42 is shut off and the counting mode is entered. This means that a counter in controller 121 is incremented until it shows that the envelope 7 is at the proper position to start printing. At this time the printing mode is enabled and the counting mode is disabled except to control printing speed (for proper spacing of characters and of the bars in the bar code). The time of enablement of the printing mode varies between the individual lines to adjust for the relative positions of the individual print heads in the print head array. When the printing mode is enabled, the program loads the print heads with data from the print buffer.

If the software is not in printing or counting mode, it is counting the number of interrupts which have occurred since the clutch was turned on. If too many have been executed, it means that an envelope has not traveled out of the bin (due either to feed failure or to lack of envelopes). If such occurs, a signal is given, the motor is shut off, error light is turned on, and the controller returns to the status loop.

### Operation

To operate our bar code addressing system, the desired addresses are entered into the data bank of external computer 123; the size of nip 51 and the gap between the print heads and platen is set by adjusting the knob which turns eccentrics 53 and 55 for the envelope thickness; slidable fence 34 is set for the width of the envelopes; and envelopes 7 are loaded into bin 5 face up.

It is then only necessary to start the system.

When the machine is on line and has valid address data, the clutch is engaged causing feed rollers 35 and 41 to turn. The leading edge of the envelope 7 located at the bottom of the stack will be in contact with the frictional surface 49 of the rounded control surface 45. The first feed roller 35, because of its lobed surface 36, will cause the stack of envelopes to vibrate and the envelope at the bottom to lose contact with frictional surface 49. The envelope is then drawn by second feed roller 41 (which has a surface of higher friction than surface 47 on control surface 45) through the transverse opening or nip. The leading edge of envelope 7 then passes to first set of transport rollers 61.

After the leading edge of the first envelope passes the first transport rollers 61, it passes by sensor 103 which disengages the clutch 42 and thus stops feed rollers 35 and 41 from being driven. The electronic position tracking mechanism is also initiated. Since rollers 35 and 41 are on unidirectional bearings, they can be driven when the clutch 42 is engaged but will rotate freely when an envelope is being pulled past them by the transport rollers and the clutch is disengaged. As the trailing edge of each envelope passes each feed roller, the roller stops rotating which prevents the next envelope from being driven towards gate 32.

When the trailing edge of the first envelope passes the first sensor 101, the clutch is re-energized and the next envelope begins its motion towards gate 32.

The first envelope then passes under the print head array 77. Five of the print heads in the array of 6 print one line of the address, and the sixth print head prints the line of bar code. The computer software obtains the zip code for the bar code from the address in the data bank and converts it to the type bar code desired.

In summary, stacked envelopes are fed through nip 51 one at a time and their position sensed by sensors 101 and 103, so that the feeding of the envelopes and operation of the print heads will be controlled and synchronized. The system will then operate by itself and print addresses and bar codes on the envelopes. The various controls built into our system will serve to assure that placement and size of the bar code will satisfy Postal regulations.

## Claims

1. A printing system for simultaneously printing lines containing information upon a moving substrate (7), each line being elongated in a first direction corresponding to the direction of movement of the substrate, some of the lines being address lines (11), the lines, from top to bottom of the substrate, comprising, consecutively, at least first, second, third, and fourth lines spaced from each other in a second direction perpendicular to the first direction, said lines being printed in parallel, and longitudinally along said lines, while the substrate is in continuous motion, said printing system including:
a print head array (77) including a plurality of print heads (81, 83, 85, 87, 89, 92), one for printing each line, comprising at least first, second, third and fourth print heads associated with the first, second, third and fourth consecutive lines, respectively, at least some of the print heads being longitudinally offset relative to one another;
a stationary flat platen (75) positioned in operative relationship with the print heads;
a plurality of pairs (67, 69) of driven transport rollers (63, 65) associated with said array (77) and said platen (75), to draw printable substrates longitudinally between the print head array and platen; and
an electronic controller (121) to vary the time each print head starts to print to correspond with the extent to which that print head is offset, so that lines may be more closely spaced than permitted by the size of said print heads and said lines may be printed with predetermined starting positions;
characterised by:
said substrates comprising envelopes (7);
said lines also including a bar code line (13); and
means (88, 97) mounting said print head array so that at least two of said print heads (81, 83; or 89, 92) overlap each other in said first, longitudinal direction, the print heads which overlap not being consecutive line printing print heads in said second direction, so that the positioning of the print heads in said first direction is not in sequence with the numbers of the lines printed thereby, and so that the print heads are grouped together in association with said stationary platen (75).

2. A printing system as claimed in claim 1, further characterised in that the electronic controller (121) is operable to vary the time each print head starts to print to correspond to the offset of that print head in said first direction so that all the address lines (11)may be printed with an aligned margin.

3. A printing system as claimed in claim 1 or 2, further characterised by a guide fence (79) proximate to at least one (67) of said pairs of transport rollers, each of said rollers of said first pair having a first end adjacent said guide fence, and a second end remote from said guide fence; first biasing means (64) having a first biasing force, for biasing said first end of said pair (67) of rollers, together , and second biasing means (62) having a second biasing force, for biasing said second ends of said rollers together; said first biasing force being greater than said second biasing force so that the effective diameter of at least one of said first pair of rollers is smaller at said first end thereof so that an envelope, when transported thereby, will be biased against said guide fence.

4. A printing system as claimed in claim 3, further characterised in that said first and second biasing means are loop springs (62, 64).

5. A printing system as claimed in any preceding claim, further characterised in that said transport rollers (63, 65) have elastomeric material surfaces.

6. A printing system as claimed in any preceding claim, further characterised in that said plurality of pairs of transport rollers includes first and second pairs (67, 69) of transport rollers, positioned with respect to said means for mounting said print head and said platen so that all of said print heads are disposed, in said first direction, entirely between said first and second pairs of transport rollers, with no other transport rollers or other transporting means between said print heads in said first direction.

7. A printing system as claimed in any preceding claim, including a leading edge sensor (103) positioned in the path of said envelopes upstream of said platen (75), said sensor providing a signal to said electronic controller (121) to establish a "start" time for printing.

8. A printing system as claimed in any preceding claim, including an envelope bin (5) proximate to a first of said transport rollers, and feeding means (35, 41) to feed individual envelopes from said bin to said transport rollers.

9. A printing system as claimed in claim 8, including a trailing edge detector (101) associated with said transport rollers to detect passage of the trailing edge of an envelope and to signal said electronic controller (121) to cause said feeding means (35, 41) to feed the next envelope.

10. A printing system as claimed in any preceding claim, including means for timing the speed of said transport rollers (67) and for producing a signal related thereto to control said controller (121), whereby the speed of printing can be synchronized with the speed of motion of said envelopes.

11. A printing system as claimed in claim 10, in which said timing means includes a timing wheel (111) having uniformly spaced peripheral gaps (113) and a sensor (115) to detect said gaps as said wheel rotates.

12. A printing system as claimed in any preceding claim, wherein at least two print heads (81, 83; or 89, 92) that overlap are in line with each other in said second direction.

13. A printing system as claimed in any preceding claim, wherein said print head array (77) comprise six print heads (81, 83, 85, 87, 89, 92).

14. A printing system as claimed in claim 13, wherein said means (97) for mounting said print heads mounts said print heads so that said first (83) and fifth (81) print heads are substantially in alignment in said second direction, followed by the second print head (85), fourth print head (87), and third (89) and sixth (92) print heads, the third and sixth print heads being in substantial alignment in said second direction.

## Patentansprüche

1. Drucksystem zum gleichzeitigen Drucken von Zeilen, die Information enthalten, auf eine bewegte Unterlage ( 7 ), wobei jede Zeile in einer ersten Ausrichtung entsprechend der Bewegungsrichtung der Unterlage verläuft, wobei ein Anteil der Zeilen Adresszeilen darstellt ( 11 ), wobei wenigstens die ersten, zweiten, dritten und vierten Zeilen zueinander von oben nach unten auf der Unterlage aufeinanderfolgend in einer zweiten senkrecht zur ersten Ausrichtung angeordnet sind, wobei die Zeilen parallel in Längsrichtung gedruckt werden, während sich die Unterlage in fortwährender Bewegung befindet und wobei dieses Drucksystem einschließt:
eine Druckkopfeinheit ( 77 ), bestehend aus einer Anzahl Druckköpfe (81, 83, 85, 87, 89, 92 ), jeweils ein Kopf zum Drucken einer Zeile, bestehend aus wenigstens erstem, zweitem, drittem und viertem Druckkopf, jeweils der ersten, zweiten, dritten und vierten der aufeinanderfolgenden Zeilen zugeordnet, wobei wenigstens einige der Druckköpfe in Längsrichtung zueinander versetzt angeordnet sind;
eine feststehende flache Platte ( 75 ), in Bezug zur Arbeitsweise der Druckköpfe angeordnet;
eine Anzahl von Paaren ( 63, 65 ) angetriebener Transportwalzen ( 63, 65 ), um in Verbindung mit der Druckkopfeinheit ( 77 ) und der Platte ( 75 ) bedruckbare Unterlagen in Längsrichtung zwischen der Druckkopfeinheit und der Platte zu bewegen und
eine elektronische Steuereinrichtung ( 121 ), um die Startzeit eines jeden Druckkopfes entsprechend seiner versetzten Ausrichtung zu koordinieren, womit erreicht wird, daß die Zeilen enger zueinander angeordnet werden können, als es die Größe der Druckköpfe zuläßt und daß die Anfangspositionen der Zeilen vorbestimmit werden können,
**dadurch gekennzeichnet,** daß die
Unterlagen aus Umschlägen ( 7 ) bestehen,
daß die Zeilen auch eine Strichkodezeile ( 13 ) enthalten und daß die Druckkopfeinheit so an den Vorrichtungen ( 88, 97 ) befestigt ist, daß sich wenigstens zwei der Druckköpfe ( 81, 83 oder 89, 92 ), bezogen auf die erste, längs verlaufende Ausrichtung, teilweise in ihrer Anordnung decken und daß die Druckköpfe nicht aufeinanderfolgende Zeilen in der zweiten Ausrichtung drucken, so daß die Anordnung der Druckköpfe in dieser ersten Ausrichtung nicht der Reihenfolge der Anzahl der zu druckenden Zeilen entspricht und daß sich die Anordnung der Druckköpfe zueinander aus der Verbindung mit der feststehenden Platte ( 75 ) ergibt.

2. Drucksystem nach Anspruch 1, weiterhin **dadurch gekennzeichnet,** daß die die elektronische Steuereinrichtung ( 121 ) eine Koordinierung der Startzeit eines jeden Druckkopfes entsprechend seiner versetzten Ausrichtung in der Längsrichtung bewirkt, so daß die Adresszeilen mit ausgeglichenem Rand gedruckt werden können.

3. Drucksystem nach Anspruch 1 oder 2, weiterhin **dadurch gekennzeichnet,** daß ein Führungssteg ( 79 ) wenigstens an einer ( 67 ) der aus einem Paar bestehenden Transportwalzen anliegt, wobei jede Walze des ersten Paares an einem ersten Ende an dem Führungssteg anliegt und das zweite Ende von dem Führungssteg abweist und daß eine erste Andruckeinheit ( 64 ) einen ersten Druck ausübt, um das erste Ende der aus einem Paar ( 67 ) bestehenden Druckwalzen zusammenzudrückt, wobei eine zweite Andruckeinheit ( 62 ) einen zweiten Druck ausübt, um das zweite Ende der Walzen zusammenzudrücken, wobei der erste Druck stärker als der zweite ist, so daß der wirksame Durchmesser wenigstens einer Walze des ersten Paares an seinem ersten Ende kleiner ist, wodurch der Umschlag beim Transport zum Führungssteg hingeführt wird.

4. Drucksystem nach Anspruch 3, weiterhin **dadurch gekennzeichnet,** daß die erste und zweite Andruckeinheit aus Ringfedern (62, 64 ) besteht.

5. Drucksystem nach einem der vorhergehenden Ansprüche, weiterhin **dadurch gekennzeichnet,** daß die Oberfläche der Transportrollen ( 63, 65 ) aus elastomerischem Material besteht.

6. Drucksystem nach einem der vorhergehenden Ansprüche, weiterhin **dadurch gekennzeichnet,** daß die Anzahl Paare von Transportwalzen erste und zweite Paare ( 67, 69 ) von Transportwalzen einschließt, die in Verbindung mit der Vorrichtung zur Befestigung der Druckköpfe und der Platte so angeordnet ist, daß sich die Lage aller Druckköpfe in der Längsrichtung zwischen dem ersten und dem zweiten Paar Transportwalzen ergibt, ohne daß in Längsrichtung zwischen den Druckköpfen andere Transportwalzen oder andere Transportmittel vorgesehen sind.

7. Drucksystem nach einem der vorhergehenden Ansprüche, der einen Start-Sensor ( 103 ) für das Erkennen der vorderen Kante eines Umschlags einschließt, angeordnet auf der Platte ( 75 ) im Bereich des Transportpfades für die Umschläge, wobei dieser Sensor ein Signal für die elektronische Steuereinrichtung ( 121 ) erzeugt, um die Startzeit für den Druckvorgang zu bestimmen.

8. Drucksystem nach einem der vorhergehenden Ansprüche, der ein Eingabefach ( 5 ) für die Umschläge einschließt, welches nahe der ersten Transportwalzen und der Zufuhreinrichtung ( 35, 41 ) angeordnet ist, um Umschläge von diesem Eingabefach zu den Transportwalzen zu leiten.

9. Drucksystem nach Anspruch 8, der einen Transport-Sensor ( 101 ) in Verbindung mit den Transportrollen für das Erkennen der rückwärtigen Kante eines Umschlags einschließt, der ein Signal für die elektronische Steuereinrichtung ( 121 ) erzeugt, um die Zufuhreinrichtung (35, 41 ) zu veranlassen, den nächsten Umschlag einzuziehen.

10. Drucksystem nach einem der vorhergehenden Ansprüche, welches Mittel zur Drehzahlsteuerung der Transportrollen ( 67 ) einschließt und ein von der Drehzahl abgeleitetes Signal erzeugt, welches der Steuereinrichtung ( 121 ) zugeführt wird, womit die Druckgeschwindigkeit der Transportgeschwindigkeit des Umschlags angepaßt wird.

11. Drucksystem nach Anspruch 10, wobei die Mittel zur Drehzahlsteuerung ein Impulsrad einschließen, welches im Umfang gleichmäßig verteilte Spalten ( 113 ) aufweist und durch einen Sensor ( 115 ) bei Rotation des Rades diese Spalten abtastet.

12. Drucksystem nach einem der vorhergehenden Ansprüche, wobei wenigstens zwei der sich in ihrer Anordnung deckenden Druckköpfe ( 81, 83 oder 89, 92 ) in einer Linie zueinander in der zweiten Ausrichtung angeordnet sind.

13. Drucksystem nach einem der vorhergehenden Ansprüche, wobei die Druckkopfeinheit ( 77 ) aus sechs Druckköpfen ( 81, 83, 85, 87, 89, 92 ) besteht.

14. Drucksystem nach Anspruch 13, wobei die Vorrichtung ( 97 ), an der die Druckköpfe befestigt sind, in ihrer Befestigungsanordnung so gestaltet ist, daß der erste ( 83 ) und der fünfte ( 81 ) Druckkopf im wesentlichen in einer Linie zueinander in der zweiten Ausrichtung stehen, gefolgt vom zweiten Druckkopf ( 85 ), vom vierten Druckkopf ( 87 ) und vom dritten ( 89 ) und sechsten ( 92 ) Druckkopf, wobei der dritte und der sechste Druckkopf wiederum in einer Linie zueinander in der zweiten Ausrichtung stehen.

## Revendications

1. Système d'impression pour imprimer simultanément des lignes contenant des informations sur un substrat mobile (7) chaque ligne étant allongée suivant une première direction correspondant à la direction de déplacement du substrat, certaines lignes étant des lignes d'adresse (11), les lignes comprenant à partir du haut vers le bas du substrat consécutivement au moins une première, une deuxième, une troisième et une quatrième lignes espacées les unes des autres suivant une seconde direction perpendiculaire à la première direction, ledites lignes étant imprimées en parallèle, et longitudinalement le long desdites lignes, tandis que le substrat est en déplacement continu, ledit système d'impression comprenant :
. un ensemble 77 de tête d'impression comportant une pluralité de têtes d'impression (81, 83, 85, 87, 89, 92), une pour imprimer chaque ligne comprenant au moins une première, une deuxième, une troisième et une quatrième têtes d'impression associées avec les première, deuxième, troisième et quatrième lignes consécutives respectivement, au moins certaines têtes d'impression étant longitudinalement décalées les unes par rapport aux autres ;
. une plaque stationnaire plate (75) placée en relation opérante avec les têtes d'impression ;
. une pluralité de paires (67, 69) de rouleaux (63, 65) de transport actionnés associés avec ledit ensemble (77) et ladite plaque (75) pour entraîner des substrats imprimables longitudinalement entre l'ensemble de tête d'impression et la plaque ; et
. un contrôleur électronique (121) pour faire varier le moment auquel chaque tête d'impression commence à imprimer pour correspondre à la mesure dans laquelle chaque tête d'impression est décalée, de sorte que les lignes peuvent être plus rapprochées que cela est permis par la taille desdites têtes d'impression et lesdites lignes peuvent être imprimées avec des positions de départ prédéterminées ;
caractérisé par
- lesdits substrats comprenant des enveloppes (7);
- lesdites lignes comprenant également une ligne (13) de code barre ; et
- des moyens (88, 97) pour monter ledit ensemble de tête d'impression de façon qu'au moins deux desdites têtes d'impression (81, 83 ; ou 89, 92) se chevauchent suivant ladite première direction longitudinale, les têtes d'impression qui se chevauchent n'étant pas des têtes d'impression imprimant des lignes consécutives suivant ladite seconde direction, de sorte que le positionnement des têtes d'impression suivant ladite première direction n'est pas en séquence avec le nombre de lignes qu'elles impriment, et de sorte que les têtes d'impression sont regroupées en association avec ladite plaque stationnaire (75).

2. Système d'impression selon la revendication 1, caractérisé en outre en ce que le contrôleur électronique (121) est utilisable pour faire varier le moment auquel chaque tête d'impression commence à imprimer pour correspondre au décalage de cette tête d'impression suivant ladite première direction de sorte que les lignes d'adresses (11) peuvent être imprimées avec une marge alignée.

3. Système d'impression selon la revendication 1 ou la revendication 2, caractérisé en outre par une cloison de guidage (79) à proximité d'au moins une (67) desdites paires de rouleaux de transport, chacun desdits rouleaux de ladite première paire ayant une première extrémité adjacente à ladite cloison de guidage, et une deuxième extrémité éloignée de ladite cloison de guidage, des premiers moyens de sollicitation (64) ayant une première force de sollicitation, pour solliciter lesdites premières extrémités de ladite paire (67) de rouleaux ensemble, et des seconds moyens de sollicitation (62) ayant une seconde force de sollicitation pour solliciter lesdites secondes extrémités desdits rouleaux ensemble; ladite première force de sollicitation étant plus grande que ladite seconde force de sollicitation de sorte que le diamètre effectif d'au moins une desdites premières paires de rouleaux est plus petite à sa première extrémité de sorte qu'une enveloppe, lorsqu'ils en transportent une, est sollicitée contre ladite cloison de guidage.

4. Système d'impression selon la revendication 3, caractérisé en outre en ce que lesdits premiers et seconds moyens de sollicitation sont des ressort en boucle (62, 64).

5. Système d'impression selon l'une quelconque des revendications précédentes, caractérisé en outre en ce que lesdits rouleaux de transport (63, 65) ont des surfaces en matériau élastomère.

6. Système d'impression selon l'une quelconque des revendications précédentes, caracérisé en outre en ce que ladite pluralité de paires de rouleaux de transport comprend une première et une deuxième paire (67, 69) de rouleaux de transport, situées par rapport auxdits moyens pour monter lesdites têtes d'impression et ladite plaque de façon que toutes lesdites têtes d'impression soient disposées suivant ladite première direction entièrement entre lesdites premiere et deuxième paires de rouleaux de transport, avec aucun autre rouleau de transport ou autre moyen de transport entre lesdites têtes d'impression suivant ladite première direction.

7. Système d'impression selon l'une quelconque des revendications précédentes, comprenant un détecteur (103) de bord menant situé dans le passage desdites enveloppes en amont de ladite plaque (75), ledit détecteur délivrant un signal audit contrôleur électronique (121) pour établir un temps de départ pour l'impression.

8. Système d'impression selon l'une quelconque des revendications précédentes, comprenant un casier (5) à enveloppe à proximité d'un premier desdits rouleaux de transport, et des moyens d'alimentation (35, 41) pour amener des enveloppes individuelles à partir dudit casier vers lesdits rouleaux de transport.

9. Système d'impression selon la revendication 8, comprenant un détecteur (101) de bord arrière associé avec lesdits rouleaux de transport pour détecter le passage du bord arrière d'une enveloppe et le signaler audit contrôleur électronique (121) pour que lesdits moyens d'alimentation (35, 41) amènent l'envelope suivante.

10. Système d'impression selon l'une quelconque des revendications précédentes, comprenant des moyens pour synchroniser la vitesse desdits rouleaux de transport (67) et pour produire un signal en rapport avec ladite vitesse pour contrôler ledit contrôleur (121), d'où il s'ensuit que la vitesse d'impression peut être synchronisée avec la vitesse de déplacement desdites enveloppes.

11. Système d'impression selon la revendication 10, dans lequel ledit moyen de synchronisation comprend une roue de synchronisation (111) ayant des vides (13) périphériques espacés uniformément et un détecteur (115) pour détecter lesdits vides lorsque ladite roue tourne.

12. Système d'impression selon l'une quelconque des revendications précédentes, dans lequel au moins deux têtes d'impression (81, 83 ; ou 89, 92) qui se chevauchent sont alignées dans ladite seconde direction.

13. Système d'impression selon l'une quelconque des revendications précédentes, dans lequel ledit ensemble (77) de têtes d'impression comprend six têtes d'impression (81, 83, 85, 87, 89, 92).

14. Système d'impression selon la revendication 13, dans lequel lesdits moyens (97) pour monter lesdites têtes d'impression montent lesdites têtes d'impression de façon que les première (83) et cinquième (81) têtes d'impression sont sensiblement alignées suivant ladite seconde direction, suivi par la deuxième tête d'impression (85), la quatrième tête d'impression (87), et la troisième (89) et la sixième (92) tête d'impression, les troisième et sixième têtes d'impression étant sensiblement alignées suivant ladite seconde direction.
